# EUROPEAN PATENT APPLICATION

(11) **EP 2 730 442 A2**
(43) Date of publication of application: **14.05.2014**
(21) Application number: 13192081.1
(22) Date of filing: 08.11.2013
(51) Int. Cl.: B60J 5/04

(54) **Vehicular door frame having vertical sash**

(30) Priority: 12.11.2012 JP 2012248862
(71) Applicant: SHIROKI CORPORATION, Fujisawa-shi, Kanagawa 252-0811 (JP)
(72) Inventor: Yamada, Makoto, Fujisawa-shi,, Kanagawa 252-0811 (JP); Makita, Jun, Fujisawa-shi,, Kanagawa 252-0811 (JP); Enoki, Hiroshi, Fujisawa-shi,, Kanagawa 252-0811 (JP); Kawaguchi, Norio, Fujisawa-shi,, Kanagawa 252-0811 (JP)
(74) Representative: TBK

(57) **Abstract**

The invention relates to a vehicular door frame having a vertical sash (100). The vertical sash includes a channel member (10) defining a glass run accommodation space (11) and an inboard-side member (20) having a pocket portion (21) disposed on the inboard side of the channel member (11). An edge portion (111) of the channel member (10) and a pocket edge portion (211) of the inboard-side member (20) are joined together. At least one of the channel member (10) and the inboard-side member (20) is plated. A space (S) is provided between the edge portion (111) of the channel member (10) and the pocket edge portion (211) of the inboard-side member (20). The space (S) extends in a longitudinal direction and is open at the distal ends of the edge portions (111,211). Laser welding is performed along the space (S).

## Description

### BACKGROUND OF THE INVENTION

### Field of the invention:

The present invention relates to a vehicular door frame having a vertical sash. More particularly, the invention relates to a vehicular door frame having a vertical sash which is formed by joining together a channel member which defines a glass run accommodation space and an inboard-side member which has a pocket portion provided on the back side (inboard side) of the channel member such that the pocket portion has a predetermined volume.

### Description of the related art:

Of the sashes which constitute a vehicular door frame, a vertical sash extending in the vertical direction has a channel member which defines a glass run accommodation space, and an inboard-side member which has a pocket portion provided on the back side (inboard side) of the channel member such that the pocket portion has a predetermined volume. Examples of such a vertical sash include the rear sashes of front doors and the front sashes of rear doors.

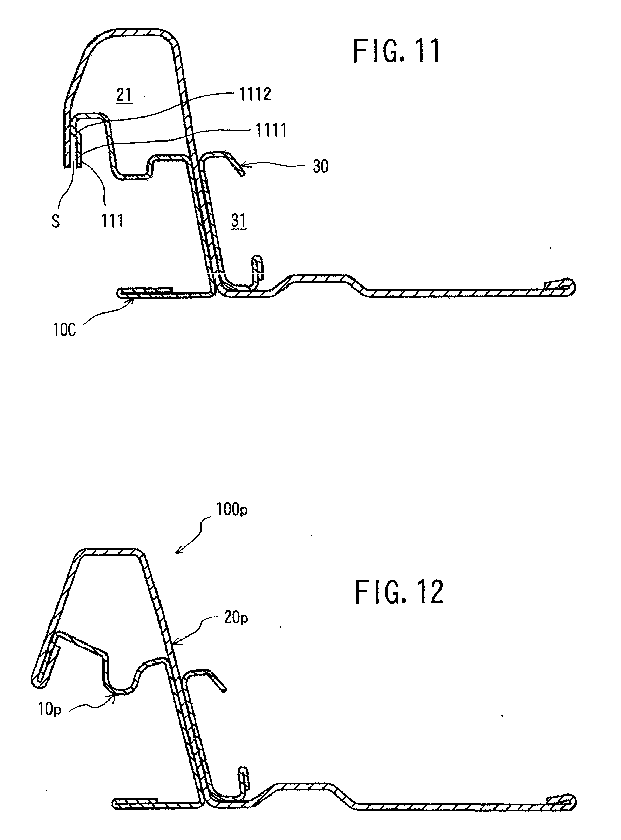

FIG. 12 shows a known vertical sash 100p in which a channel member 10p and an inboard-side member 20p are joined together through hemming. An example of such a vertical sash is disclosed in Japanese Patent Application Laid-Open (kokai) No. 2008-302778 (JP-2008-302778A).

Japanese Patent Application Laid-Open (*KoKai*) No. H8-141762 (JP-1996-141761A) discloses a technique of preventing occurrence of problems such as welding failure which would otherwise occur when members each having a plating layer are welded together by laser welding. Specifically, a space is provided between the members to be welded so as to prevent occurrence of problems such as welding failure which would otherwise be caused by gas generated as a result of evaporation of the plating layer.

Vehicular doors are demanded to expand a view along the peripheral edge of a window opening and to have a better outward appearance. Therefore, there has been a demand for decreasing the height and width of a lip of a glass run accommodated in a channel member of the vertical sash of each vehicular door frame. In order to meet such a demand, it is necessary to make less noticeable a joint region where the channel member which defines the glass run accommodation space is joined to an inboard-side member having a pocket portion disposed on the back side (inboard side) of the channel member.
An object of the present invention is to meet such demand.

### SUMMARY OF THE INVENTION

The present invention is configured as mentioned below in [1] to [4]. Reference numerals appearing in the present section are provided for easy understanding and should not he construed as limiting the invention.

### Configuration 1

[1] A vehicular door frame having a vertical sash which includes an elongated channel member 10 defining a glass run accommodation space 11 and an inboard-side member 20 having a pocket portion 21 disposed along the channel member 10 to be located on the inboard side thereof and in which an inboard-side opening edge portion 111 of the channel member 10 and a pocket edge portion 211 of the inboard-side member 20 are joined together, wherein
at least one of the channel member 10 and the inboard-side member 20 is plated;
a space S is provided between the inboard-side opening edge portion 111 of the channel member 10 and the pocket edge portion 211 of the inboard-side member 20, the space S extending in a longitudinal direction and being open at distal ends of the edge portions 111,211; and
laser welding is performed along the space S.

According to configuration 1, it is possible to make welding marks W less noticeable without lowering the welding strength between the channel member 10 and the inboard-side member 20 having the pocket portion 21 disposed on the inboard side thereof.

### Configuration 2

[2] In the vehicular door frame having a vertical sash of configuration 1, the space S is provided intermittently in the longitudinal direction.
According to configuration 2, each laser welding operation can he performed properly, whereby a proper welding strength can be obtained.

### Configuration 3

[3] In the vehicular door frame having a vertical sash of configuration 1 or 2, one of the channel member 10 and the inboard-side member 20 is formed by press forming, and the space S is formed by an extension portion 2111 which extends from a step portion 2112 formed on the press-formed member at a location near an edge of the member.
According to configuration 3, the space S can be formed at the time of formation of the members, and no additional step is required.

### Configuration 4

[4] In the vehicular door frame having a vertical sash of any of configurations 1 to 3, the inboard-side opening edge portion 111 of the channel member 10 is extended so as to form a projecting portion 1115 which projects beyond the pocket edge portion 211 of the inboard-side member 20 and is bent toward the inboard side at an angle such that the projecting portion 1115 does not comes into contact with an end surface 2110 of the pocket edge portion 211 of the inboard-side member 20 and does not cover a region where laser welding is performed.
According to configuration 4, the glass run 50 does not come into contact with the end surface 2110 of the pocket edge portion 211 of the inboard-side member 20, whereby damage to the glass run 50 can be prevented.

### BRIEF DESCRIPTION OF THE DRAWINGS

FIG. 1 is an explanatory view showing a vertical sash 100 of a vehicular door frame, and FIG. 2 is a perspective view of a main portion of the vertical sash 100 (a portion surrounded by an alternate long and two short dashes line in FIG. 1);
FIGS. 3 to 5 are cross-sectional views of the vertical sash 100, wherein FIG. 3 is a cross-sectional view taken along a plane indicated by line C-C in FIG. 2, FIG. 4 is a cross-sectional view taken along a plane indicated by line D-D in FIG. 2, and FIG. 5 is a cross-sectional view taken along a plane indicated by line E-E in FIG. 2;
FIGS. 6 and 7 are explanatory view showing laser welding, wherein FIG. 6 corresponds to FIG. 3, and FIG. 7 corresponds to FIG. 5;

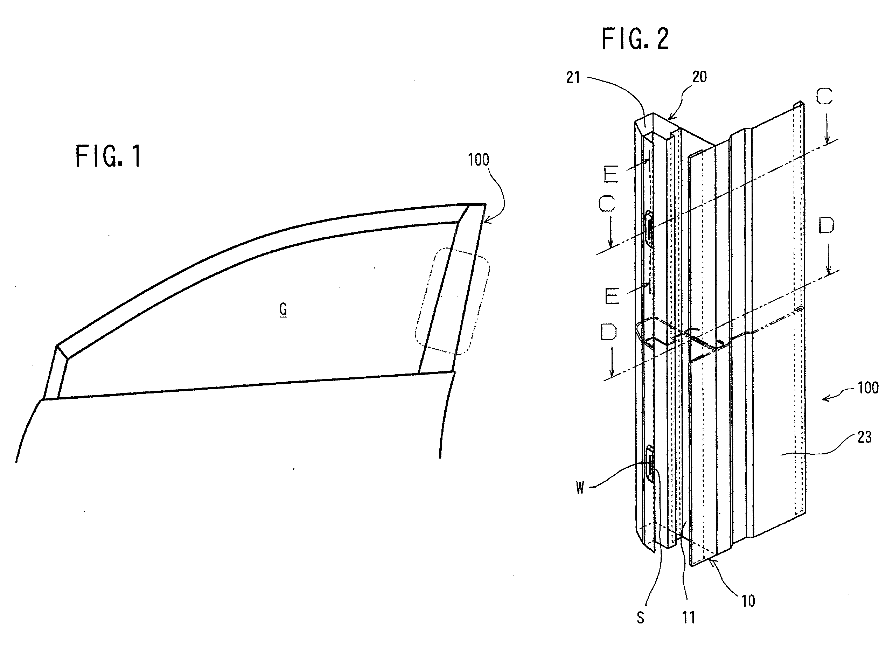

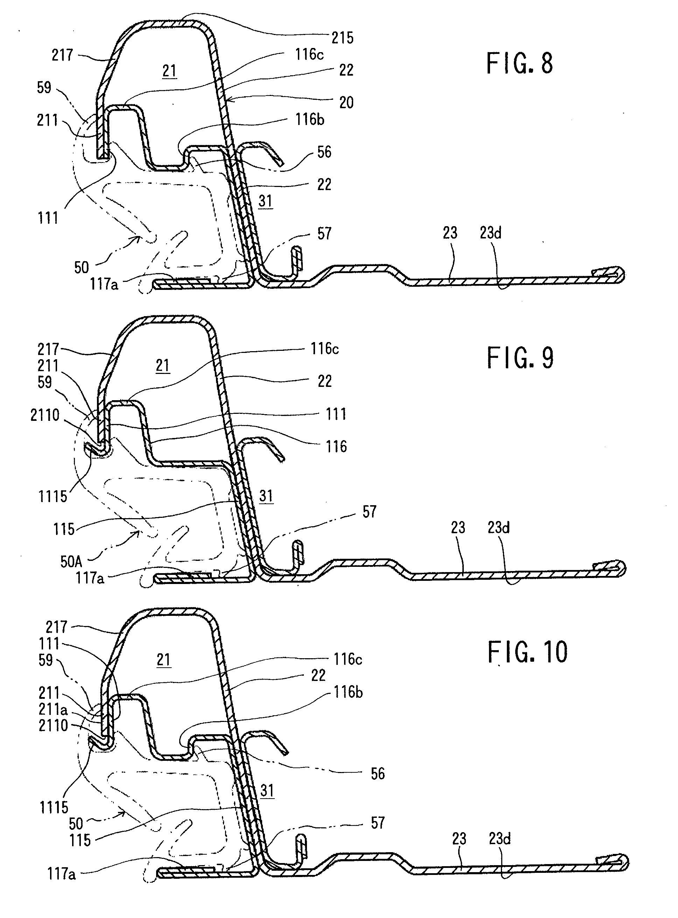

FIGS. 8 to 10 are cross-sectional views each taken along a plane indicated by line D-D in FIG. 2, and each showing a state in which a glass run 50/50A is attached to a modification of the vertical sash 100, wherein FIG. 8 shows the case where an inboard-side opening edge portion 111 of a channel member 10 has no projecting portion, the glass run 50 has an inner lip 56, and the channel member 10 has an engagement step portion 116b corresponding to the inner lip 56, FIG. 9 shows the case where the inboard-side opening edge portion 111 has a projecting portion 1115, the glass run 50A has no inner lip, and the channel member 10 has no engagement step portion for the inner lip, and FIG. 10 shows the case where the inboard-side opening edge portion 111 has the projecting portion 1115, the glass run 50 has the inner lip 56, and the channel member 10 has the engagement step portion 116b corresponding to the inner lip 56;
FIG. 11 is a cross-sectional view taken along a plane indicated by line C-C in FIG. 2, showing a modification of the vertical sash 100 in which a step portion 1112 and an extension portion 1111 for forming a space S are formed on the channel member 10C side; and
FIG. 12 is a cross-sectional view showing a conventional vertical sash 100p in which a channel member 10p and an inboard-side member 20p joined together through hemming.

### DESCRIPTION OF THE PREFERRED EMBODIMENT

An embodiment of the present invention will be described with reference to the drawings.
As shown in FIG. 1, a vertical sash 100 of a door frame according to the present embodiment is the rear sash of a front door frame of an automobile. As shown in FIGS. 2, 3, and 4, the vertical sash 100 is composed of a channel member 10 which defines a glass run accommodation space 11; an inboard-side member 20 having a pocket portion 21 disposed on the back side (inboard side) of the channel member 10; and an auxiliary member 30 which defines a weather strip holding recess 31.

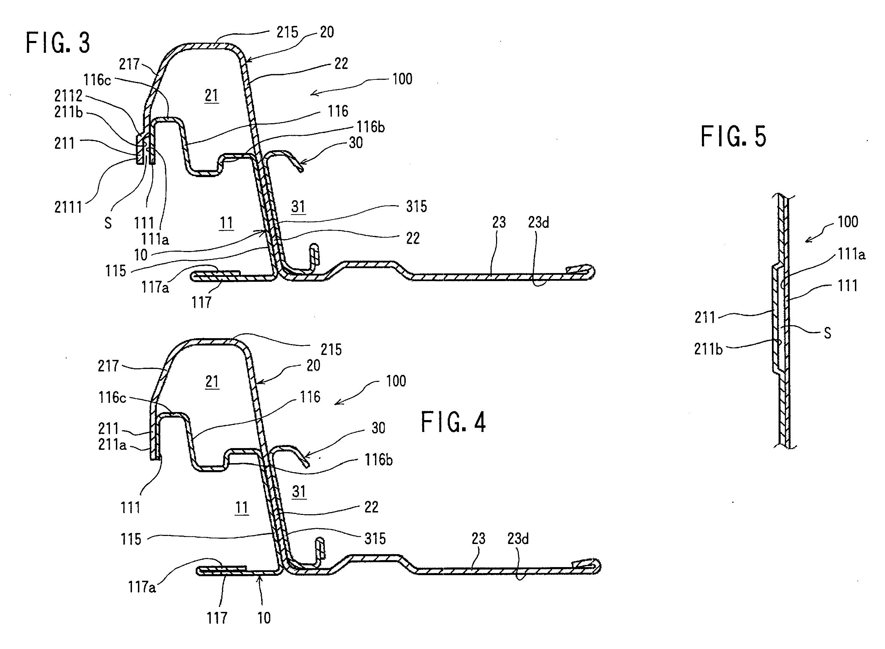

The channel member 10 shown in FIGS. 3 and 4 has the glass run accommodation space 11 which has a groove-like shape. A glass run 50 or 50A is held in this glass run accommodation space 11 (see FIGS. 8 to 10). The groove shape of the channel member 10 is formed by a groove bottom portion 115, an outboard-side groove side wall portion 117 which extends from the near side (outboard side) of the groove bottom portion 115 toward a window glass G (see FIG. 1), and an inboard-side groove side wall portion 116 which extends from the far side (inboard side) of the groove bottom portion 115 toward the window glass G. A distal end portion of the inboard-side groove side wall portion 116 is bent to extend toward the outboard side to thereby form an inboard-side opening edge portion 111.

A distal end portion of the outboard-side groove side wall portion 117 located on the side toward the opening is folded back toward the groove bottom portion 115 so as to form a folded back portion 117a. An outboard-side inner lip 57 of the glass run 50/50A is engaged with the distal end of the folded back portion 117a (see FIGS. 8 to 10). The inboard-side groove side wall portion 116 has an engagement step portion 116b formed near the groove bottom portion 115. An inboard-side inner lip 56 of the glass run 50 is engaged with the engagement step portion 116b (see FIGS. 8 and 10). Also, a portion of the inboard-side groove side wall portion 116 near the opening is formed into a concave portion 116c which is concave toward the inboard side. The above-mentioned inboard-side opening edge portion 111 extends from the distal end of the concave portion 116c toward the outboard side.
This channel member 10 is formed, through rolling forming, from a plated, elongated iron plate.

The inboard-side member 20 has the pocket portion 21 disposed on the back side (inboard side) of the channel member 10 and having a predetermined volume; a design portion 23 having a design surface 23d exposed on the outer surface of the vehicle body; and a connection plate portion 22 which connects the pocket portion 21 and the design portion 23.
The design surface 23d may be covered with a garnish (a cover made of resin; not shown).

The pocket portion 21 forms the shape of a groove which is open toward the outboard side. This groove shape is formed by a groove bottom portion 215, a groove side wall portion 217 located on the side toward the window glass, and the above-mentioned connection plate portion 22, which is a groove side wall portion located on the side opposite the window glass.

The edge of the window-glass-side groove side wall portion 217 located on the side toward the opening of the pocket (outboard side) and a portion near the edge form the above-mentioned pocket edge portion 211. The pocket edge portion 211 has a step portion 2112 formed at the inboard-side end thereof, and an extension portion 2111 which extends from the step portion 2112. As a result, a space S is provided between the inner surface 211b of the pocket edge portion 211 and the outer surface 111a of the inboard-side opening edge portion 111 of the channel member 10. As can be understood through comparison between the cut positions shown in FIG. 2 and the cross sections shown in FIGS. 3 to 5, the space S is provided intermittently in the longitudinal direction of the vertical sash 100 (vertical direction in FIG. 1).
This inboard-side member 20 is formed, through press forming, from a plated, elongated iron plate. However, the inboard-side member 20 may be formed by roll forming. In such a case, the step portion 2112 and the extension portion 2111 for forming the space S are formed by press forming after completion of the roll forming. Alternatively, the step portion 2112 and the extension portion 2111 may also be formed by roll forming, and after completion of the roll forming, portions which are adjacent to the step portion 2112 and the extension portion 2111 in the longitudinal direction (portions to be clamped by a clamping apparatus 90) may be formed by press forming. In the case where roll forming is employed, a portion corresponding to the above-mentioned auxiliary member 30 (portion functioning as the weather strip holding recess 31) may be formed from the same member as that of the inboard-side member.

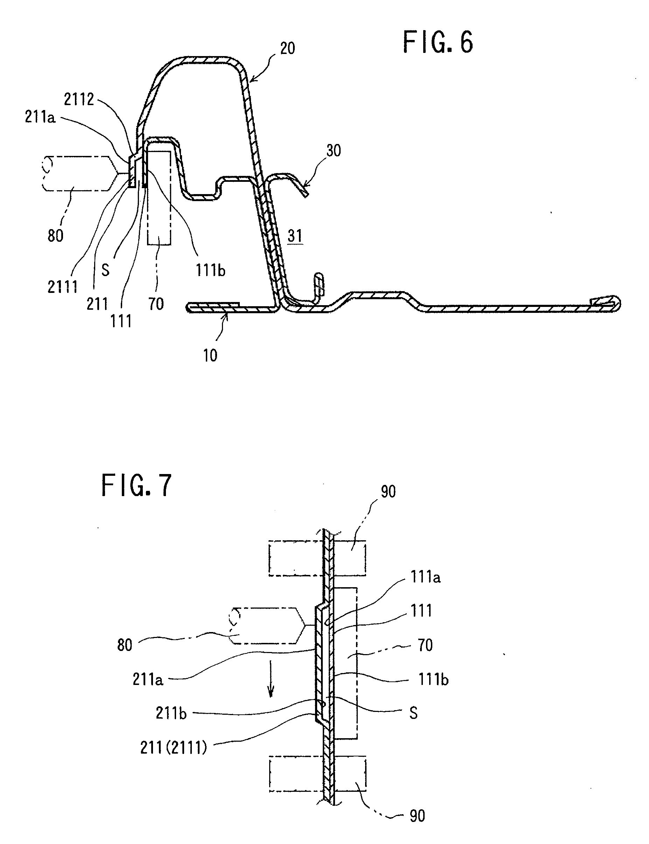

As shown in FIGS. 6 and 7, the channel member 10 and the inboard-side member 20 are welded together by applying a laser beam to regions where the space S is provided and moving the laser beam along a straight line. Namely, in a state in which a copper plate 70 is disposed on the inner surface 111b of the inboard-side opening edge portion 111, the channel member 10 and the inboard-side member 20 are clamped together by the clamping apparatus 90 at positions located on longitudinally opposite sides of the region where the space S is provided. In this state, a laser beam output from a laser apparatus 80 is applied to the outer surface 211a of the pocket edge portion 211, and the laser apparatus 80 is moved along the longitudinal direction (in the direction indicated by an arrow in FIG. 7). Thus, the inboard-side opening edge portion 111 of the channel member 10 and the pocket edge portion 211 of the inboard-side member 20 are laser-welded, along a straight line, at a position near the distal ends thereof.

During the laser welding, the components of the plating layers formed on the surfaces of the channel member 10 and the inboard-side member 20 evaporate and scatter (explosively scatter). However, since the space S is open at the distal ends of the edge portions (the lower side in FIG. 6), the evaporated components are discharged through the opening. Therefore, it is possible to reliably prevent the evaporated components of plating from forming defects, such as voids, in the metal melted by the laser welding, to thereby reliably prevent a decrease in welding strength. Also, since laser welding is employed, each welding mark W has a narrow strip-like shape. Therefore, the welding mark W is readily concealed by a lip 59 of the glass run 50/50A (see FIGS. 2, 8 to 10). Also, since laser welding is employed, a desired welding strength can be obtained by properly setting the length of the space S in the longitudinal direction (the length of laser welding in the longitudinal direction). The thickness of the space S is about 0.2 mm.

A near side (outboard side) portion of the connection plate portion 22 of the inboard-side member 20 is located between the groove bottom portion 115 of the channel member 10 and the groove bottom portion 315 of the auxiliary member 30. These portions are united by means of known spot welding.

In the present embodiment, the auxiliary member 30 which forms the weather strip holding recess 31 is a member different from the inboard-side member 20. However, the auxiliary member 30 and the inboard-side member 20 may be formed from the same member by, for example, forming the inboard-side member through roll forming as described above. Also, the design portion 23 of the inboard-side member 20 may be formed from the same member as the channel member 10 or the auxiliary member 30.

Next, modifications will be described.
FIG. 10 shows a modification of the above embodiment in which the inboard-side opening edge portion 111 of the channel member is extended so as to form a projecting portion 1115 which projects beyond the pocket edge portion 211 of the inboard-side member 20, and the projecting portion 1115 is bent toward the outer surface 211a of the pocket edge portion 211 of the inboard-side member 20 at an angle such that the projecting portion 1115 does not come into contact with the distal end surface 2110 of the pocket edge portion 211 of the inboard-side member 20 and the projecting portion 1115 does not cover the laser-welded portion of the inboard-side member 20 located near the distal end of the pocket edge portion 211. Since the vertical sash is configured as described above, it is possible to prevent the glass run 50 from coming into contact with the distal end surface 2110 of the pocket edge portion 211 of the inboard-side member 20, to thereby reliably prevent damage to the glass run 50. Also, since the projecting portion 1115 is inclined so as to extend obliquely, the projection amount (the amount of projection toward the window glass G) can be decreased. Accordingly, the projection height (the amount of projection toward the window glass G) of the glass run 50 can be reduced. As a result, the glass run 50 can be made less noticeable, whereby a wider view can be secured. Notably, the projection amount of the projecting portion 1115 is set to about 2 mm in consideration of requirements associated with the roll forming of the channel member.

FIG. 9 shows a modification which differs from the modification of FIG. 10 in that the engagement step portion 116b formed on the inboard-side groove side wall portion 116 of the channel member at a position near the groove bottom portion 115 is removed and the inboard-side groove side wall portion 116 is made flat. Therefore, in the modification shown in FIG. 9, the glass run 50A does not have the inboard-side inner lip 56 which corresponds to the engagement step portion 116b. Such a modification is also possible.

FIG. 11 shows a modification in which the step portion and the extension portion which extends from the step portion and forms the space S in cooperation with the step portion are formed on the inboard-side opening edge portion 111 of the channel member 10C, unlike the above-described embodiment (see FIGS. 3 to 5) in which the step portion and the extension portion are formed on the pocket edge portion 211 of the inboard-side member 20. Such a modification is also possible. In this case, the step portion 1112 and the extension portion 1111 are formed by press forming. Alternatively, the step portion 1112 and the extension portion 1111 may also be formed by roll forming, and after completion of the roll forming, portions which are adjacent to the step portion 1112 and the extension portion 1111 in the longitudinal direction (portions to be clamped by the clamping apparatus 90) may be formed by press forming.

In the above-described embodiment, the present invention is applied to the rear sash of each front door frame of an automobile. However, the present invention can be applied to the front sash of each rear door frame of an automobile. Also, the present invention can be applied to sashes, other than those of front and rear door frames, which include a channel member and an inboard-side member and which extend vertically.

In the above-described embodiment, both of the channel member and the inboard-side member are plated. However, the present invention can be applied to the case where only one of the channel member and the inbord-side member is is plated.

### DESCRIPTION OF REFERENCE NUMERALS

- 100: a vertical sash
- 10: a channel member
- 11: a glass run accommodation space
- 111: an inboard-side opening edge portion
- 20: an inboard-side member
- 21: a pocket portion
- 211: a pocket edge portion
- 22: a connection plate portion
- 23: a design portion
- S: a space
- 30: an auxiliary member
- 31: a weather strip holding recess
- 50/50A: a glass run
- 70: a copper plate
- 80: a laser apparatus
- 90: a clamping apparatus

The invention relates to a vehicular door frame having a vertical sash (100). The vertical sash includes a channel member (10) defining a glass run accommodation space (11) and an inboard-side member (20) having a pocket portion (21) disposed on the inboard side of the channel member (11). An edge portion (111) of the channel member (10) and a pocket edge portion (211) of the inboard-side member (20) are joined together. At least one of the channel member (10) and the inboard-side member (20) is plated. A space (S) is provided between the edge portion (111) of the channel member (10) and the pocket edge portion (211) of the inboard-side member (20). The space (S) extends in a longitudinal direction and is open at the distal ends of the edge portions (111,211). Laser welding is performed along the space (S).

## Claims

1. A vehicular door frame having a vertical sash which includes an elongated channel member defining a glass run accommodation space and an inboard-side member having a pocket portion disposed along the channel member to be located on the inboard side thereof and in which an inboard-side opening edge portion of the channel member and a pocket edge portion of the inboard-side member are joined together, **characterized in that**
at least one of the channel member and the inboard-side member is plated;
a space is provided between the inboard-side opening edge portion of the channel member and the pocket edge portion of the inboard-side member, the space extending in a longitudinal direction and being open at distal ends of the edge portions; and
laser welding is performed along the space.

2. A vehicular door frame having a vertical sash according to claim 1, wherein the space is provided intermittently in the longitudinal direction.

3. A vehicular door frame having a vertical sash according to claim 1, wherein one of the channel member and the inboard-side member is formed by press forming, and the space is formed by an extension portion which extends from a step portion formed on the press-formed member at a location near an edge of the member.

4. A vehicular door frame having a vertical sash according to any one of claims 1, wherein the inboard-side opening edge portion of the channel member is extended so as to form a projecting portion which projects beyond the pocket edge portion of the inboard-side member and is bent toward the inboard side at an angle such that the projecting portion does not comes into contact with an end surface of the pocket edge portion of the inboard-side member and does not cover a region where laser welding is performed.
